# EUROPEAN PATENT SPECIFICATION

(11) **EP 4 532 301 B1**
(45) Date of publication and mention of the grant of the patent: **20.05.2026**
(21) Application number: 23734380.1
(22) Date of filing: 22.05.2023
(51) Int. Cl.: B62D 55/06, B62D 55/10, B62D 33/063, E02F 9/02, B62D 55/116

(54) **A VEHICLE AND AN ADJUSTABLE UNDERCARRIAGE FOR THE VEHICLE**
FAHRZEUG UND VERSTELLBARES UNTERGESTELL FÜR DAS FAHRZEUG
VÉHICULE ET TRAIN DE ROULEMENT RÉGLABLE CORRESPONDANT AU VÉHICULE

(30) Priority: 25.05.2022 NO 20220613
(43) Date of publication of application: 09.04.2025
(73) Proprietor: Felle, Kim Arild, 4865 Åmli (NO)
(72) Inventor: Felle, Kim Arild, 4865 Åmli (NO)
(74) Representative: Bryn Aarflot AS
(86) International application number: PCT/NO2023/050119
(87) International publication number: WO 2023/229466

(56) References cited:
- EP-A1- 3 763 884
- US-A- 3 289 779
- US-A- 4 763 742
- US-A- 6 105 699
- US-B1- 6 173 973

## Description

### Background of the invention

The present invention relates to a vehicle and an adjustable undercarriage for the vehicle, as defined in claims 1 and 6. More specifically the vehicle is of a type having a movement carriage mechanism of track drive type. Typically, the vehicle has a superstructure which carries operational equipment, e.g. a boom at the end of which are located work tools.

### Prior art

Use of track driven vehicles and various types of associated adjustable undercarriages is well known, but most of them lack satisfactory means for fully adjusting to undulating or hilly terrain where such a vehicle is to operate, e.g. in a forest. At such locations, it is important that the vehicle superstructure can assume a properly levelled posture and that the track drive carriage mechanisms can be adjusted in position to allow proper movement on the ground of the terrain.

US11091358 discloses a track drive based vehicle which has means for adjusting posture of a vehicle superstructure using hydraulic jacks, the tracks of the vehicle being oscillating/tiltable. GB2489720 discloses a similar vehicle structure.

Further, some prior art vehicles and superstructure levelling apparatus thereof are known from e.g. WO2007139878 and US2003047367.

Other background prior art is known from e.g. US4763742A, AT9639-U, CN103963860, EP2071085, EP3763884, EP2058438, JPH0585424, JPH04353128, JPH07324353, KR20090049808, KR20090047024, US2018072356, US2021267132, US3012624, US3289779, US4650017, US6241263, WO2008077168, and WO2016156660.

### Summary of the invention

The present invention has as an object to provide a vehicle undercarriage which enables common or mutually independent tilting of the track driven carriage mechanisms, and at the same time provide for levelling of the superstructure, all of which is important for safe vehicle operation.

These two movement aspects can be combined, according to the invention. This results in a vehicle which may have its superstructure at high or low level during operation, and assuming a lowermost level posture during transport. Further, it is made possible to raise the superstructure well above the carriage mechanisms when it is required to obtain a proper levelling of the superstructure, in particular when tilting each or one of the carriage mechanisms.

The novel and inventive features of the present vehicle and its associated adjustable undercarriage device are presented in the independent claims 1 and 6, and with further features appearing from their associated sub-claims, as well as from the detailed description with reference to the attached drawings exhibiting non-limiting embodiments of the invention.

### Brief description of the drawings

Fig.1 is a front perspective view from above and one side of the adjustable undercarriage of the vehicle.
Fig.2 is a front perspective view from above and the other side of the adjustable undercarriage of the vehicle.
Fig.3 is a rear perspective view slightly from above and said other one side of the adjustable undercarriage of the vehicle.
Fig.4 is another front perspective view from above and said one side of the adjustable undercarriage of the vehicle.
Fig.5 is a side view of the vehicle undercarriage seen from said one side and showing one track drive mechanism tilted relative to the other track drive mechanism.
Fig.6 is a perspective rear view of the vehicle undercarriage seen from said one side and showing both track drive mechanisms mutually tilted relative to a reference platform of the undercarriage.
Fig.7 is a side view of the vehicle undercarriage seen from said one side and showing both track drive mechanisms mutually tilted relative to a reference platform of the undercarriage.
Fig.8 is a perspective rear view of the vehicle undercarriage seen from said one side and showing one track drive mechanism tilted relative to the other track drive mechanism, and relative to a reference platform of the undercarriage.
Fig.9 is a simplified diagram of controls and sensors related to adjustment of the undercarriage.
Fig.10 is a simplifies illustration of the vehicle with undercarriage and superstructure installed thereon, but without operational equipment indicated.

### Detailed description

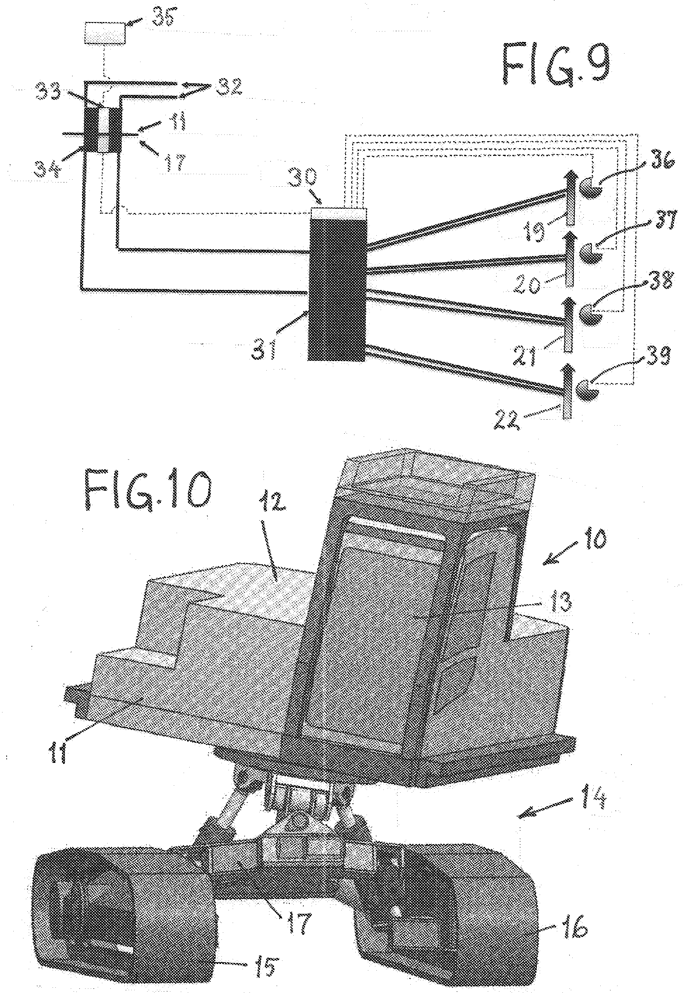

On Fig.10 there is shown a vehicle 10 configured to carry operational equipment and tools, e.g. a boom and grabbing tools, however the equipment and tools not shown for sake of clarity, is shown on Fig.10, the vehicle 10 comprising a superstructure 11 having a housing 12 for a power plant for the operational equipment, such as compressors for hydraulic or pneumaic fluid, as well as electric power generators to power control equipment and electric motors. Further, there is provided a control cabin 13 for the operator of the vehicle 10.

The undercarriage is labelled 14 and exhibits track drive movement mechanisms 15; 16, and a reference platform 17.

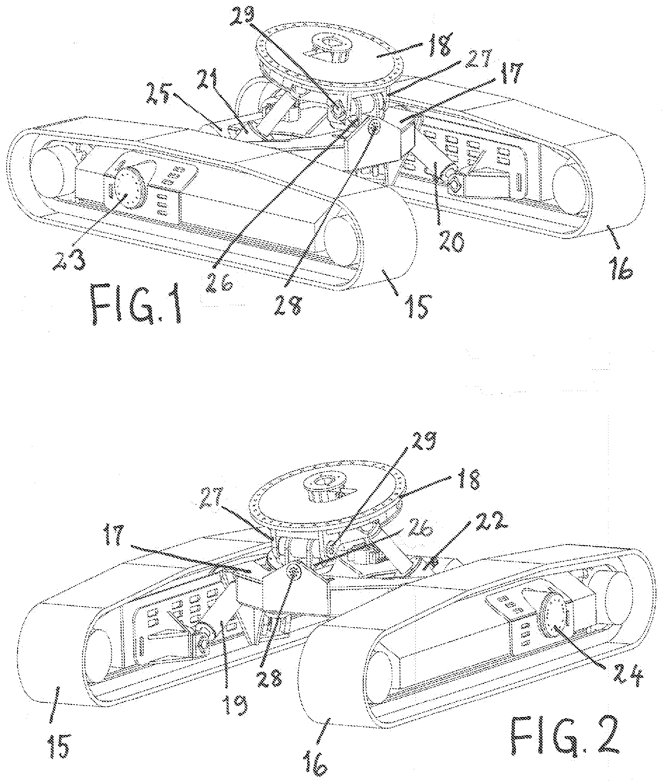

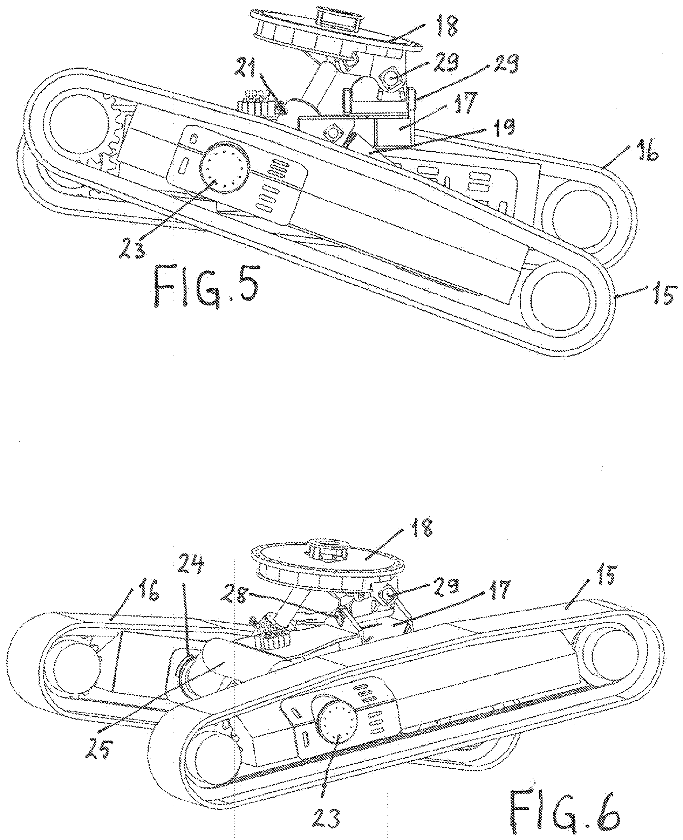

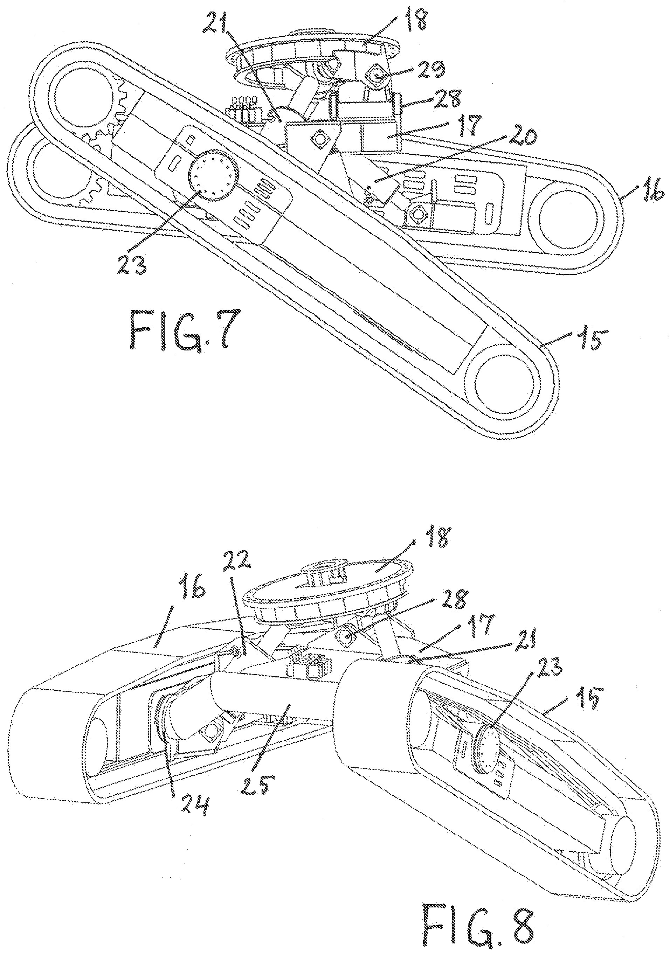

The adjustable undercarriage will now be further described with reference to Figs. 1 - 8.

The adjustable undercarriage 14 has the pair of vehicle movement track drive carriage mechanisms 15; 16. A superstructure supporting connection platform 18 is tiltably linked to the reference platform 17, and jacks 19 - 22 for adjustments of the undercarriage are present, the operation thereof to be further described.

Each track drive movement carriage mechanism 15; 16 is tiltably attached to the reference platform 17 via a respective rotary link 23; 24 to a common beam 25 which is rigidly attached to the reference platform 17 at a rear region thereof.

The reference platform 17 exhibits a first rotary link 26 which is interactive with a second rotary link 27, the first rotary link 26 at a first end thereof being rotary linked to the reference platform 17 about a first pivot shaft 28 extending in a longitudinal direction of the undercarriage 14, and at a second end thereof being rotary linked via the second rotary link 27 to a superstructure supporting connection platform 18 about a second pivot shaft 29 being at 90° to the direction of the first pivot shaft 28.

It will be appreciated that the connection platform 18 is connectable to a swing assembly for controlled rotation of the superstructure 11.

The jacks 19 - 22 are constituted by first and second controllable jacks 19; 20 and third and fourth jacks 21; 22.

Each jack of the first and second jacks 19;20 is at one end is rotary linked to the reference platform 17 and is at a second end rotary linked to a respective track drive movement carriage mechanism 15;16 at a location spaced in longitudinal direction forward of the front region the reference platform 17.

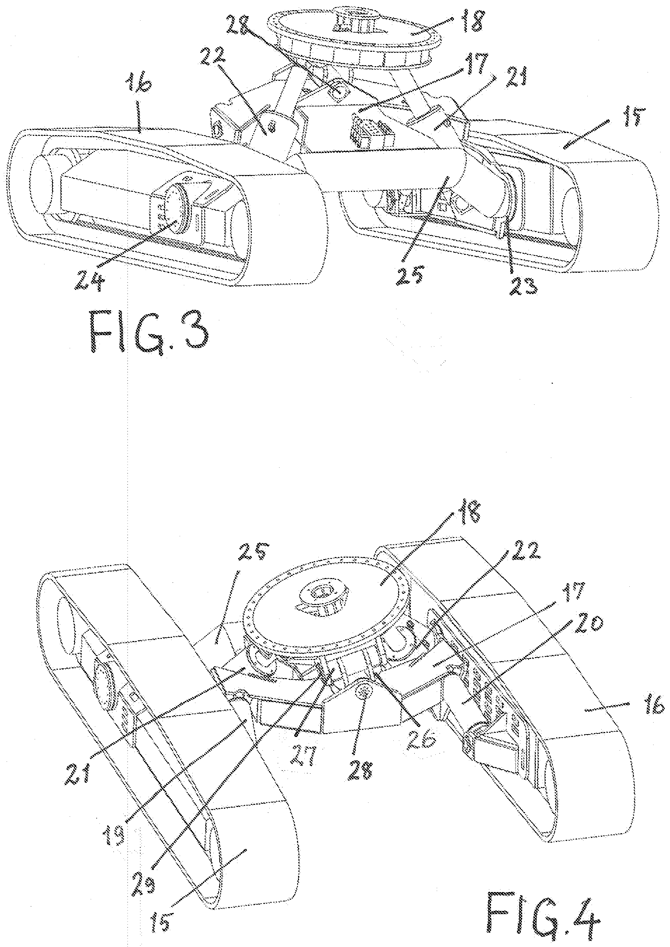

It will be appreciated that the first and second jacks 19; 20 enable either or both of the track drive carriage mechanisms to be tilted relative the reference platform 17. Further, as more clearly noted from viewing Fig. 3, it is noted that the common beam 25 has the configuration of a shallow U. Therefore, when operating the first and second jacks 19; 20 in a syncronized operation, it will be appreciated that the reference platform 17 will not only be lifted at its front region, but also slightly at its rear region, because the beam 25 with its shallow U will rotate slightly about the rotary links 23; 24, thereby causing the rear region of the reference platform 17 and the bottom of the shallow U to rise slightly.

The third and fourth controllable jacks 21; 22 are located at either side region of the connection platform 18, each jack thereof at an upper end being rotary linked to the connection platform 18 and at a lower end being rotary linked to a respective adjacent one 15; 16 of the track drive movement carriage mechanisms forward of the respective rotary links 23; 24 of the beam 25.

Operation of the jacks 21; 22 may cause forward or rearward tilting and/or lateral tilting either way of the connection platform 18 to contribute to levelling of the superstructure 11, and also lifting of the superstructure 11 relative to the track drive movement carriage mechanisms 15; 16.

Viewing the drawings it is seen that the first and second jacks 19; 20 together enable tilting of reference platform 17 and the superstructure 11 in a first longitudinal direction of the vehicle 10. Operation of one of the first and second jacks 19; 20 enables the pair of track drive mmovement carriage mechanisms 15; 16 to assume mutually different inclinations relative to the reference platform 17

The third and fourth jacks 21; 22 provide for tilting of the connection platform 18 in lateral direction of the undercarriage 14 about the first rotary shaft 28 and/or tilting of the connection platform about the second rotary shaft 29 in a longitudinal direction of the undercarriage 14.

As indicated above, it will be recalled that cooperative operation of the first, second, third and fourth jacks 19 - 22 provide for raising and levelling the superstructure above posture(s) of the track drive movement carriage mechanisms 15; 16.

Although not indicated on any of the drawings, it will again be appreciated that the superstructure 11 will in operation carry operational equipment, e.g. a boom at the end of which are located work tools. If the vehicle is to be used for e.g. forestry, the tools could be gripping claws, sawing device, or branch cutting device, although other tools such as grabbing shovels, scraper devices or drilling devices could be some of many. The nature of tools is not a limitation of the invention.

Equipment to control operation and movement of a boom and tools attached to an end thereof is well known prior art technique and has no bearing on the current invention. Further, any rotation of the superstructure **11** relative to the connection platform using a well known rotation apparatus has no bearing on the present invention and will not be discussed.

Fig.9 is a simple diagram to illustrate how the four jacks 19 - 22 may be operated. The solid lines denote hydraulic lines, whereas the dotted lines denote electrical signal lines. A programmable computer 30 is provided and it controls an electronically controlled hydraulic valves block unit 31. The unit selectively connects with the the jacks 19 - 22. Pressurized hydraulic fluid is provided via inlet 32 from the power plant (not shown) inside the housing 12. Electric and hydraulic swivels 33; 35. Suitably operation of the jacks 19 - 22 are made from an operation panel 35 with joystick, push buttons, switches and displays in the cabin 13 of the superstructure 11. Associated with each of the jacks 19 - 22 are suitably provided sensors 36 - 39 to record levelling, piston rod movement of the jacks, angle values, video images etc. The computer may be configured to process the information from the sensors to provide operational guidance to an operator in the cabin 13.

## Claims

1. A vehicle (10) comprising
- a vehicle superstructure (11) configured to carry operational equipment, and
- a jack adjustable undercarriage (14) with a pair of vehicle movement track drive carriage mechanisms (15; 16), a reference platform (17), and a superstructure supporting connection platform (18) tiltably linked to the reference platform (17),
**wherein**
- each track drive movement carriage mechanism (15; 16) is tiltably attached to the reference platform (17) via a respective rotary beam link (23; 24) to a common beam (25) which is rigidly attached to the reference platform (17) at a rear region thereof,
- the reference platform (17) exhibits a first rotary link (26) interactive with a second rotary link (27), the first rotary link (26) at a first end thereof being rotary linked to the reference platform (17) about a first pivot shaft (28) extending in a longitudinal direction of the undercarriage (14), and at a second end thereof being rotary linked via the second rotary link (27) to the superstructure supporting connection platform (18) about a second pivot shaft (29) being at 90° to the direction of the first pivot shaft (28),
- first and second controllable jacks (19; 20) are provided, each jack thereof at one end being rotary linked to the reference platform (17) and at a second end being rotary linked to a respective track drive movement carriage mechanism (15;16) at a location spaced in longitudinal direction forward of a front region of the reference platform (17), and
- third and fourth controllable jacks (21; 22) being located at either side region of the connection platform (18), each jack thereof at an upper end being rotary linked to the connection platform (18) and at a lower end being rotary linked to a respective adjacent one of the track drive movement carriage mechanisms (15; 16) at a location forward of a respective one of the rotary beam links (23; 24).

2. The vehicle of claim 1, wherein the first and second jacks (19; 20) together enable tilting of reference platform (17) and the superstructure (11) in a first longitudinal direction of the vehicle (10).

3. The vehicle of claim 1 or 2, wherein operation of one or both of the first and second jacks (19; 20) enables the pair of track drive movement carriage mechanisms (15; 16) to assume mutually different or common inclinations relative to the reference platform (17).

4. The vehicle of claim 1, wherein the third and fourth jacks (21; 22) provide for tilting of the connection platform (18) in lateral direction of the vehicle about the first rotary shaft (28) and/or tilting of the connection platform (18) about the second rotary shaft (29) in longitudinal direction of the undercarrriage (14).

5. The vehicle of any one of claims 1 - 4, wherein cooperative operation of the first, second, third and fourth jacks (19; 20; 21; 22) provide for raising and levelling the superstructure (11) above posture(s) of the carriage mechanisms (15;16).

6. An adjustable undercarriage (14) for a vehicle (10), comprising
- a pair of vehicle movement track drive carriage mechanisms (15; 16), a reference platform (17), and a connection platform (18) configured to enable support of a vehicle superstructure (11), the connection platform (18) being tiltably linked to the reference platform (17),
**wherein**
- each track drive movement carriage mechanism (15; 16) is tiltably attached to the reference platform (17) via a respective rotary beam link (23; 24) to a common beam (25) which is rigidly attached to the reference platform (17) at a rear region thereof,
- the reference platform (17) exhibits a first rotary link (26) interactive with a second rotary link (27), the first rotary link (26) at a first end thereof being rotary linked to the reference platform (17) about a first pivot shaft (28) extending in a longitudinal direction of the undercarriage (14), and at a second end thereof being rotary linked via the second rotary link (27) to the superstructure supporting connection platform (18) about a second pivot shaft (29) being at 90° to the direction of the first pivot shaft (28),
- first and second controllable jacks (19; 20) are provided, each jack thereof at one end being rotary linked to the reference platform (17) and at a second end being rotary linked to a respective track drive movement carriage mechanism (15;16) at a location spaced in longitudinal direction forward of a front region of the reference platform (17), and
- third and fourth controllable jacks (21; 22) being located at either lateral region of the connection platform (18), each jack thereof at an upper end being rotary linked to the connection platform (18) and at a lower end being rotary linked to a respective adjacent one of the track drive movement carriage mechanisms (15; 16) at a location forward of a respective one of the rotary beam links (23; 24).

7. The undercarriage (14) of claim 6, wherein the first and second jacks (19; 20) together enable tilting of reference platform (17) and the superstructure (11) in a first longitudinal direction of the vehicle (10).

8. The undercarriage (14) of claim 6 or 7, wherein operation of one or both of the first and second jacks (19; 20) enables the pair of track drive movement carriage mechanisms (15; 16) to assume mutually different or common inclinations relative to the reference platform (17).

9. The undercarriage (14) of claim 6, wherein the third and fourth jacks (21; 22) provide for tilting of the connection platform (18) in lateral direction of the vehicle about the first rotary shaft (28) and/or tilting of the connection platform (18) about the second rotary shaft (29) in longitudinal direction of the undercarrriage (14).

10. The undercarriage (14) of any one of claims 6 - 9, wherein cooperative operation of the first, second, third and fourth jacks (19; 20; 21; 22) provide for raising and levelling the connection platform (18) above posture(s) of the carriage mechanisms (15;16).

## Patentansprüche

1. Fahrzeug (10), umfassend
- einen Fahrzeugaufbau (11), der so konfiguriert ist, dass er betriebsfähige Ausrüstung trägt, und
- ein hebeverstellbares Untergestell (14) mit einem Paar von Spurfahrwerk-Antriebsmechanismen (15; 16) zur Fahrzeugbewegung, einer Referenzplattform (17) und einer Verbindungsplattform (18) zum Tragen des Aufbaus, die schwenkbar mit der Referenzplattform (17) verbunden ist,
**wobei**
- jeder Spurfahrwerk-Antriebsmechanismus (15; 16) über ein jeweiliges Drehbalken-Verbindungselement (23; 24) schwenkbar mit der Referenzplattform (17) verbunden ist und an einem gemeinsamen Balken (25) befestigt ist, der an einem hinteren Bereich der Referenzplattform (17) starr befestigt ist,
- die Referenzplattform (17) ein erstes Drehgelenk (26) aufweist, das mit einem zweiten Drehgelenk (27) zusammenwirkt, wobei das erste Drehgelenk (26) an seinem ersten Ende um eine erste Schwenkwelle (28), die sich in Längsrichtung des Untergestells (14) erstreckt, drehbar mit der Referenzplattform (17) verbunden ist und an einem zweiten Ende über das zweite Drehgelenk (27) mit der Verbindungsplattform (18) zum Tragen des Aufbaus um eine zweite Schwenkwelle (29) drehbar verbunden ist, die in einem Winkel von 90° zur Richtung der ersten Schwenkwelle (28) verläuft,
- erste und zweite steuerbare Hubstützen (19; 20) vorgesehen sind, wobei jede dieser Hubstützen an einem Ende drehbar mit der Referenzplattform (17) verbunden ist und an einem zweiten Ende drehbar mit einem jeweiligen Spurfahrwerk-Antriebsmechanismus (15; 16) an einer Stelle verbunden ist, die in Längsrichtung vor einem vorderen Bereich der Referenzplattform (17) beabstandet ist, und
- dritte und vierte steuerbare Hubstützen (21; 22) an beiden Seitenbereichen der Verbindungsplattform (18) angeordnet sind, wobei jede dieser Hubstützen an einem oberen Ende drehbar mit der Verbindungsplattform (18) verbunden ist und an einem unteren Ende drehbar mit einem jeweils benachbarten der Spurfahrwerk-Antriebsmechanismen (15; 16) an einer Stelle vor einem jeweiligen der Drehbalken-Verbindungselemente (23; 24) verbunden ist.

2. Fahrzeug nach Anspruch 1, wobei die erste und zweite Hubstütze (19; 20) gemeinsam das Schwenken der Referenzplattform (17) und des Aufbaus (11) in einer ersten Längsrichtung des Fahrzeugs (10) ermöglichen.

3. Fahrzeug nach Anspruch 1 oder 2, wobei der Betrieb einer oder beider der ersten und zweiten Hubstützen (19; 20) es dem Paar von Spurfahrwerk-Antriebsmechanismen (15; 16) ermöglicht, zueinander unterschiedliche oder gleiche Neigungen relativ zur Referenzplattform (17) einzunehmen.

4. Fahrzeug nach Anspruch 1, wobei die dritte und vierte Hubstütze (21; 22) dazu vorgesehen sind, die Verbindungsplattform (18) in Fahrzeugquerrichtung um die erste Schwenkwelle (28) und/oder die Verbindungsplattform (18) in Längsrichtung des Fahrwerks (14) um die zweite Schwenkwelle (29) zu schwenken.

5. Fahrzeug nach einem der Ansprüche 1-4, wobei das zusammenspielende Betreiben der ersten, zweiten, dritten und vierten Hubstützen (19; 20; 21; 22) das Anheben und Nivellieren des Aufbaus (11) über die Stellung(en) der Spurfahrwerk-Antriebsmechanismen (15; 16) ermöglicht.

6. Verstellbares Untergestell (14) für ein Fahrzeug (10), umfassend
- ein Paar von Spurfahrwerk-Antriebsmechanismen (15; 16) zur Fahrzeugbewegung, eine Referenzplattform (17) und eine Verbindungsplattform (18), die so konfiguriert ist, dass sie das Tragen eines Fahrzeugaufbaus (11) ermöglicht, wobei die Verbindungsplattform (18) schwenkbar mit der Referenzplattform (17) verbunden ist,
**wobei**
- jeder Spurfahrwerk-Antriebsmechanismus (15; 16) über ein jeweiliges Drehbalken-Verbindungselement (23; 24) schwenkbar mit der Referenzplattform (17) verbunden ist und an einem gemeinsamen Balken (25) befestigt ist, der an einem hinteren Bereich der Referenzplattform (17) starr befestigt ist,
- die Referenzplattform (17) ein erstes Drehgelenk (26) aufweist, das mit einem zweiten Drehgelenk (27) zusammenwirkt, wobei das erste Drehgelenk (26) an seinem ersten Ende um eine erste Schwenkachse (28), die sich in Längsrichtung des Untergestells (14) erstreckt, drehbar mit der Referenzplattform (17) verbunden ist und an einem zweiten Ende über das zweite Drehgelenk (27) mit der Verbindungsplattform (18) zum Tragen des Aufbaus um eine zweite Schwenkwelle (29) drehbar verbunden ist, die in einem Winkel von 90° zur Richtung der ersten Schwenkwelle (28) verläuft,
- erste und zweite steuerbare Hubstützen (19; 20) vorgesehen sind, wobei jede dieser Hubstützen an einem Ende drehbar mit der Referenzplattform (17) verbunden ist und an einem zweiten Ende drehbar mit einem jeweiligen Spurfahrwerk-Antriebsmechanismus (15; 16) an einer Stelle verbunden ist, die in Längsrichtung vor einem vorderen Bereich der Referenzplattform (17) beabstandet ist, und
- dritte und vierte steuerbare Hubstützen (21; 22) an beiden Bereichen der Verbindungsplattform (18) angeordnet sind, wobei jede dieser Hubstützen an einem oberen Ende drehbar mit der Verbindungsplattform (18) verbunden ist und an einem unteren Ende drehbar mit einem jeweils benachbarten der Spurfahrwerk-Antriebsmechanismen (15; 16) an einer Stelle vor einem jeweiligen der Drehbalken-Verbindungselemente (23; 24) verbunden ist.

7. Untergestell (14) nach Anspruch 6, wobei die erste und zweite Hubstütze (19; 20) gemeinsam das Schwenken der Referenzplattform (17) und des Aufbaus (11) in einer ersten Längsrichtung des Fahrzeugs (10) ermöglichen.

8. Untergestell (14) nach Anspruch 6 oder 7, wobei der Betrieb einer oder beider der ersten und zweiten Hubstützen (19; 20) es dem Paar von Spurfahrwerk-Antriebsmechanismen (15; 16) ermöglicht, zueinander unterschiedliche oder gleiche Neigungen relativ zur Referenzplattform (17) einzunehmen.

9. Untergestell (14) nach Anspruch 6, wobei die dritte und vierte Hubstütze (21; 22) dazu vorgesehen sind, die Verbindungsplattform (18) in Fahrzeugquerrichtung um die erste Drehwelle (28) und/oder die Verbindungsplattform (18) in Längsrichtung des Fahrwerks (14) um die zweite Schwenkwelle (29) zu schwenken.

10. Untergestell (14) nach einem der Ansprüche 6 bis 9, wobei das zusammenspielende Betreiben der ersten, zweiten, dritten und vierten Hubstützen (19; 20; 21; 22) das Anheben und Nivellieren der Verbindungsplattform (18) über die Stellung(en) der Spurfahrwerk-Antriebsmechanismen (15; 16) ermöglicht.

## Revendications

1. Véhicule (10) comprenant
- une superstructure (11) de véhicule configurée pour porter un équipement opérationnel, et
- un train de roulement réglable par vérin (14) doté d'une paire de mécanismes de chariot de déplacement du véhicule à entraînement par chenilles (15 ; 16), une plateforme de référence (17), et une plateforme de connexion (18) supportant la superstructure, reliée de manière basculante à la plateforme de référence (17),
**dans lequel**
- chaque mécanisme de chariot de déplacement du véhicule à entraînement par chenilles (15 ; 16) est fixé de manière basculante à la plateforme de référence (17) par l'intermédiaire d'une poutre de liaison rotative respective (23 ; 24) à une poutre commune (25) qui est fixée rigidement à la plateforme de référence (17) au niveau d'une région arrière de celle-ci,
- la plateforme de référence (17) présente une première liaison rotative (26) en interaction avec une seconde liaison rotative (27), la première liaison rotative (26), au niveau d'une première extrémité de celle-ci, étant reliée de manière rotative à la plateforme de référence (17) autour d'un premier arbre de pivotement (28) s'étendant dans une direction longitudinale du train de roulement (14), et, au niveau d'une seconde extrémité de celle-ci, étant reliée de manière rotative via la seconde liaison rotative (27) à la plateforme de connexion (18) supportant la superstructure autour d'un second arbre de pivotement (29) qui est à 90° par rapport à la direction du premier arbre de pivotement (28),
- des premier et deuxième vérins commandables (19 ; 20) sont fournis, chacun de ceux-ci, au niveau d'une extrémité, étant relié de manière rotative à la plateforme de référence (17) et, au niveau d'une seconde extrémité, étant relié de manière rotative à un mécanisme de chariot de déplacement du véhicule à entraînement par chenilles (15 ; 16) respectif au niveau d'un emplacement espacé, dans la direction longitudinale, à l'avant d'une région avant de la plateforme de référence (17), et
- des troisième et quatrième vérins commandables (21 ; 22) étant situés au niveau de chaque région latérale de la plateforme de connexion (18), chacun de ceux-ci, au niveau d'une extrémité supérieure, étant relié de manière rotative à la plateforme de connexion (18) et, au niveau d'une extrémité inférieure, étant relié de manière rotative à un mécanisme de chariot de déplacement du véhicule à entraînement par chenilles (15 ; 16) adjacent respectif au niveau d'un emplacement à l'avant d'une poutre de liaison rotative (23 ; 24) respective.

2. Véhicule selon la revendication 1, dans lequel les premier et deuxième vérins (19 ; 20) ensemble permettent le basculement de la plateforme de référence (17) et de la superstructure (11) dans une première direction longitudinale du véhicule (10).

3. Véhicule selon la revendication 1 ou la revendication 2, dans lequel le fonctionnement de l'un ou les deux des premier et deuxième vérins (19 ; 20) permet à la paire de mécanismes de chariot de déplacement du véhicule à entraînement par chenilles (15 ; 16) d'adopter des inclinaisons mutuellement différentes ou communes par rapport à la plateforme de référence (17).

4. Véhicule selon la revendication 1, dans lequel les troisième et quatrième vérins (21 ; 22) permettent le basculement de la plateforme de connexion (18) dans une direction latérale du véhicule autour du premier arbre rotatif (28) et/ou le basculement de la plateforme de connexion (18) autour du second arbre rotatif (29) dans la direction longitudinale du train de roulement (14).

5. Véhicule selon l'une quelconque des revendications 1 à 4, dans lequel le fonctionnement coopératif des premier, deuxième, troisième et quatrième vérins (19 ; 20 ; 21 ; 22) permet le levage et la mise à niveau de la superstructure (11) au-dessus de la/les posture(s) des mécanismes de chariot (15 ; 16).

6. Train de roulement réglable (14) pour un véhicule (10), comprenant
- une paire de mécanismes de chariot de déplacement du véhicule à entraînement par chenilles (15 ; 16), une plateforme de référence (17), et une plateforme de connexion (18) configurée pour permettre le support d'une superstructure (11) de véhicule, la plateforme de connexion (18) étant reliée de manière basculante à la plateforme de référence (17),
**dans lequel**
- chaque mécanisme de chariot de déplacement du véhicule à entraînement par chenilles (15 ; 16) est fixé de manière basculante à la plateforme de référence (17) par l'intermédiaire d'une poutre de liaison rotative respective (23 ; 24) à une poutre commune (25) qui est fixée rigidement à la plateforme de référence (17) au niveau d'une région arrière de celle-ci,
- la plateforme de référence (17) présente une première liaison rotative (26) en interaction avec une seconde liaison rotative (27), la première liaison rotative (26), au niveau d'une première extrémité de celle-ci, étant reliée de manière rotative à la plateforme de référence (17) autour d'un premier arbre de pivotement (28) s'étendant dans une direction longitudinale du train de roulement (14), et, au niveau d'une seconde extrémité de celle-ci, étant reliée de manière rotative via la seconde liaison rotative (27) à la plateforme de connexion (18) supportant la superstructure autour d'un second arbre de pivotement (29) qui est à 90° par rapport à la direction du premier arbre de pivotement (28),
- des premier et deuxième vérins commandables (19 ; 20) sont fournis, chacun de ceux-ci, au niveau d'une extrémité, étant relié de manière rotative à la plateforme de référence (17) et, au niveau d'une seconde extrémité, étant relié de manière rotative à un mécanisme de chariot de déplacement du véhicule à entraînement par chenilles (15 ; 16) respectif au niveau d'un emplacement espacé, dans la direction longitudinale, à l'avant d'une région avant de la plateforme de référence (17), et
- des troisième et quatrième vérins commandables (21 ; 22) étant situés au niveau de chaque région latérale de la plateforme de connexion (18), chacun de ceux-ci, au niveau d'une extrémité supérieure, étant relié de manière rotative à la plateforme de connexion (18) et, au niveau d'une extrémité inférieure, étant relié de manière rotative à un mécanisme de chariot de déplacement du véhicule à entraînement par chenilles (15 ; 16) adjacent respectif au niveau d'un emplacement à l'avant d'une poutre de liaison rotative (23 ; 24) respective.

7. Train de roulement (14) selon la revendication 6, dans lequel les premier et deuxième vérins (19 ; 20) ensemble permettent le basculement de la plateforme de référence (17) et de la superstructure (11) dans une première direction longitudinale du véhicule (10).

8. Train de roulement (14) selon la revendication 6 ou la revendication 7, dans lequel le fonctionnement de l'un ou les deux des premier et deuxième vérins (19 ; 20) permet à la paire de mécanismes de chariot de déplacement du véhicule à entraînement par chenilles (15 ; 16) d'adopter des inclinaisons mutuellement différentes ou communes par rapport à la plateforme de référence (17).

9. Train de roulement (14) selon la revendication 6, dans lequel les troisième et quatrième vérins (21 ; 22) permettent le basculement de la plateforme de connexion (18) dans une direction latérale du véhicule autour du premier arbre rotatif (28) et/ou le basculement de la plateforme de connexion (18) autour du second arbre rotatif (29) dans la direction longitudinale du train de roulement (14).

10. Train de roulement (14) selon l'une quelconque des revendications 6 à 9, dans lequel le fonctionnement coopératif des premier, deuxième, troisième et quatrième vérins (19 ; 20 ; 21 ; 22) permet le levage et la mise à niveau de la plateforme de connexion (18) au-dessus de la/les posture(s) des mécanismes de chariot (15 ; 16).
